# EUROPEAN PATENT APPLICATION

(11) **EP 4 495 753 A1**
(43) Date of publication of application: **22.01.2025**
(21) Application number: 23769652.1
(22) Date of filing: 09.03.2023
(51) Int. Cl.: G06F 3/06

(54) **OFFLOADING-CARD NAMESPACE MANAGEMENT SYSTEM AND METHOD, AND INPUT/OUTPUT REQUEST PROCESSING SYSTEM AND METHOD**

(30) Priority: 18.03.2022 CN 202210273112
(71) Applicant: Cloud Intelligence Assets Holding (Singapore) Private Limited, Singapore 189554 (SG)
(72) Inventor: PIAO, Jun, Hangzhou, Zhejiang 310030 (CN)
(74) Representative: Barker Brettell LLP
(86) International application number: PCT/CN2023/080410
(87) International publication number: WO 2023/174146

(57) **Abstract**

A system and a method for managing a namespace of an offloading card and processing an input/output request. The system for managing the namespace of the offloading card (300) includes a host (301) and an offloading card (302) connected to the host (301), where the host (301) has multiple applications issuing an input/output request running thereon, and the host (301) sends a namespace creation request to the offloading card (302), the offloading card (302) creates corresponding multiple namespaces for the multiple applications according to the namespace creation request, the offloading card (302) allocates multiple hardware queues corresponding to the created multiple namespaces according to the namespace creation request and binds the allocated multiple hardware queues respectively to the corresponding namespaces; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved.

## Description

The present application claims priority to Chinese Patent Application No. 202210273112.9, filed on March 18, 2022 to the China National Intellectual Property Administration and entitled "SYSTEM AND METHOD FOR MANAGING NAMESPACE OF OFFLOADING CARD AND PROCESSING INPUT/OUTPUT REQUEST", which is incorporated into the present application by reference in its entirety.

### TECHNICAL FIELD

The present disclosure relates to the field of computer technology and, in particular, to a system and a method for managing a namespace of an offloading card and processing an input/output request.

### BACKGROUND

NVMe (Non-Volatile Memory express, Non-Volatile Memory Host Controller Interface Specification) memory is a common solid state memory in the field of server technology, such as, an NVMe SSD (Solid State Drive, Solid State Drive). With the complexity of product application scenarios, directly connecting NVMe devices need to occupy a large amount of computing space of the central processing unit (CPU), which affects CPU performance.

Currently, the namespace (namespace) technology has been adopted to perform space partition/management on the NVME storage, mainly configured to, for different applications, partition disk logical space and establish security isolation mechanisms. Different namespaces are isolated using software technology and share some hardware resources, such as hardware queues.

The advantages of namespace technology known in related arts are software implementation, providing flexible space management capabilities, and meeting software defined storage requirements.

The disadvantages of namespace technology known in related arts are that different applications on the namespace will share hardware resources, such as hardware queues, of the NVMe devices, which may cause performance interference problems and relatively poor fault isolation capability.

### SUMMARY

In order to solve the problems in the related arts, embodiments of the present disclosure provide a system and a method for managing a namespace of an offloading card and processing an input/output request.

In a first aspect, a system for managing a namespace of an offloading card is provided in an embodiment of the present disclosure, including a host and the offloading card connected to the host, where,
the host has multiple applications issuing an input/output request running thereon, and the host sends a namespace creation request to the offloading card,
the offloading card creates corresponding multiple namespaces for the multiple applications according to the namespace creation request,
the offloading card allocates multiple hardware queues corresponding to the created multiple namespaces according to the namespace creation request and binds the allocated multiple hardware queues respectively to the corresponding namespaces.

In combination with the first aspect, in a first implementation of the first aspect of the present disclosure, the host has a virtual machine running thereon, the multiple applications run in the virtual machine, and the virtual machine includes:
a driver, configured to manage the multiple hardware queues, where the virtual machine sends the namespace creation request to the offloading card via the driver.

In combination with the first implementation of the first aspect, in a second implementation of the first aspect of the present disclosure, the offloading card includes a controller and a hardware accelerator, where,
the controller creates respective namespaces for the multiple applications according to the namespace creation request, allocates the multiple hardware queues corresponding to the created multiple namespaces from the hardware accelerator and binds the allocated multiple hardware queues respectively to the corresponding namespaces.

In combination with the second implementation of the first aspect, in a third implementation of the first aspect of the present disclosure, the host includes a central processing unit with multiple cores, the virtual machine includes a user space and a kernel space,
where the user space has the multiple applications running therein, the applications are executed by corresponding cores, and
where the kernel space includes a general block layer and the driver, the general block layer includes multiple software queues corresponding to the multiple cores and establishes a one-to-one corresponding relationship from the multiple software queues to the multiple hardware queues.

In combination with the third implementation of the first aspect, in a fourth implementation of the first aspect of the present disclosure, the driver is an NVMe driver, the controller is an NVMe controller,
where the host is connected to an NVMe device via the offloading card,
where the NVMe device is mounted inside the virtual machine,
where an application running in the user space issues an input/output request to the general block layer,
where the input/output request is converted into an input/output request conforming with an NVMe protocol by processing of the general block layer and the NVMe driver, and the input/output request conforming with the NVMe protocol is sent to the NVMe controller,
where the NVMe controller transfers the input/output request conforming with the NVMe protocol to the offloading card via the hardware queues corresponding to the created namespaces,
where the offloading card sends the input/output request conforming with the NVMe protocol to the NVMe device.

In a second aspect, a method for managing a namespace of an offloading card is provided in an embodiment of the present disclosure, the method runs in a system for managing namespace of offloading card, and the system for managing the namespace of the offloading card includes a host and the offloading card connected to the host, where the method includes:
sending, by the host, a namespace creation request to the offloading card, based on multiple applications issuing an input/output request running on the host;
creating, by the offloading card, corresponding multiple namespaces for the multiple applications, according to the namespace creation request;
allocating, by the offloading card, multiple hardware queues corresponding to the created multiple namespaces according to the namespace creation request and binding the allocated multiple hardware queues respectively to the corresponding namespaces.

In combination with the second aspect, in a first implementation of the second aspect of the present disclosure, the host has a virtual machine running thereon, and the multiple applications run in the virtual machine, the virtual machine includes a driver configured to manage the multiple hardware queues, where the sending, by the host, the namespace creation request to the offloading card, includes:
sending, by the virtual machine, the namespace creation request to the offloading card via the driver.

In combination with the first implementation of the second aspect, in a second implementation of the second aspect of the present disclosure, the offloading card includes a controller and a hardware accelerator, where the creating, by the offloading card, the corresponding multiple namespaces for the multiple applications, according to the namespace creation request, includes:
creating, by the controller, respective namespaces for the multiple applications according to the namespace creation request,
where the allocating, by the offloading card, the multiple hardware queues corresponding to the created multiple namespaces according to the namespace creation request and binding the allocated multiple hardware queues respectively to the corresponding namespaces, includes:
   allocating, by the controller, the multiple hardware queues corresponding to the created multiple namespaces from the hardware accelerator and binding the allocated multiple hardware queues respectively to the corresponding namespaces.

In combination with the second implementation of the second aspect, in a third implementation of the second aspect of the present disclosure, the host includes a central processing unit with multiple cores, the virtual machine includes a user space and a kernel space,
where the user space has the multiple applications running therein, the applications are executed by corresponding cores, and
where the kernel space includes a general block layer and the driver, the general block layer includes multiple software queues corresponding to the multiple cores and establishes a one-to-one correspondence relationship from the multiple software queues to the multiple hardware queues.

In combination with the third implementation of the second aspect, in a fourth implementation of the second aspect of the present disclosure, the driver is an NVMe driver, the controller is an NVMe controller,
where the host is connected to an NVMe device via the offloading card,
where the method further includes:
   mounting the NVMe device inside the virtual machine;
   issuing, by an application running in the user space, an input/output request to the general block layer;
   converting, by processing of the general block layer and the NVMe driver, the input/output request into an input/output request conforming with an NVMe protocol, and sending the input/output request conforming with the NVMe protocol to the NVMe controller;
   transferring, by the NVMe controller, the input/output request conforming with the NVMe protocol to the offloading card via the hardware queues corresponding to the created namespaces; and
   sending, by the offloading card, the input/output request conforming with the NVMe protocol to the NVMe device.

In a third aspect, a system for processing an input/output request is provided in an embodiment of the present disclosure, the system includes a host, an offloading card, and an NVMe device connected to the host via the offloading card,
where the host has a virtual machine running thereon, the host includes a central processing unit with multiple cores, the virtual machine includes a user space and a kernel space, where the user space has multiple applications issuing an input/output request running therein, the applications are executed by corresponding cores, the kernel space includes a general block layer and an NVMe driver, the general block layer includes multiple software queues corresponding to the multiple cores, the virtual machine sends a namespace creation request to the offloading card via the NVMe driver,
where the offloading card includes an NVMe controller and a hardware accelerator, the NVMe controller creates respective namespaces for the multiple applications according to the namespace creation request, allocates multiple hardware queues corresponding to the created multiple namespaces from the hardware accelerator and binds the allocated multiple hardware queues respectively to the corresponding namespaces,
where the NVMe driver is configured to manage the multiple hardware queues, the general block layer establishes a one-to-one corresponding relationship from the multiple software queues to the multiple hardware queues,
where an application running in the user space issues an input/output request to the general block layer,
where the input/output request is converted into an input/output request conforming with an NVMe protocol by processing of the general block layer and the NVMe driver, and the input/output request conforming with the NVMe protocol is sent to the NVMe controller,
where the NVMe controller transfers the input/output request conforming with the NVMe protocol to the offloading card via the hardware queues corresponding to the created namespaces,
where the offloading card sends the input/output request conforming with the NVMe protocol to the NVMe device.

In a fourth aspect, a method for processing an input/output request is provided in an embodiment of the present disclosure, the method runs in a system for processing an input/output request, the system for processing input/output request includes a host, an offloading card, and an NVMe device connected to the host via the offloading card,
where the host has a virtual machine running thereon, the host includes a central processing unit with multiple cores, the virtual machine includes a user space and a kernel space, where the user space has multiple applications issuing an input/output request running therein, the applications are executed by corresponding cores, the kernel space includes a general block layer and an NVMe driver, the general block layer includes multiple software queues corresponding to the multiple cores, the virtual machine sends a namespace creation request to the offloading card via the NVMe driver,
where the offloading card includes an NVMe controller and a hardware accelerator, the NVMe controller creates respective namespaces for the multiple applications according to the namespace creation request, allocates multiple hardware queues corresponding to the created multiple namespaces from the hardware accelerator and binds the allocated multiple hardware queues respectively to the corresponding namespaces,
where the NVMe driver is configured to manage the multiple hardware queues, the general block layer establishes a one-to-one correspondence relationship from the multiple software queues to the multiple hardware queues,
where the method further includes:
   issuing, by an application running in the user space, an input/output request to the general block layer;
   converting, by processing of the general block layer and the NVMe driver, the input/output request into an input/output request conforming with an NVMe protocol, and sending the input/output request conforming with the NVMe protocol to the NVMe controller;
   transferring, by the NVMe controller, the input/output request conforming with the NVMe protocol to the offloading card via the hardware queues corresponding to the created namespaces,
   sending, by the offloading card, the input/output request conforming with the NVMe protocol to the NVMe device.

According to the technical solution provided by an embodiment of the present disclosure, by means of the system for managing the namespace of the offloading card, which includes a host and the offloading card connected to the host, where the host has multiple applications issuing an input/output request running thereon, and the host sends a namespace creation request to the offloading card, the offloading card creates corresponding multiple namespaces for the multiple applications according to the namespace creation request, the offloading card allocates multiple hardware queues corresponding to the created multiple namespaces according to the namespace creation request and binds the allocated multiple hardware queues respectively to the corresponding namespaces; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved. Moreover, compared to the solution that all procedures of applications share multiple hardware queues managed in unity by a namespace, the solution of the embodiment of the present disclosure does not affect the applications of other hardware queues in the event of a failure occurring in a single hardware queue, and has greatly improved the performance isolation capability and the fault isolation capability.

According to the technical solution provided by an embodiment of the present disclosure, by means that the host has a virtual machine running thereon, and the multiple applications run in the virtual machine, the virtual machine includes: a driver, configured to manage the multiple hardware queues, where the virtual machine sends the namespace creation request to the offloading card via the driver; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved.

According to the technical solution provided by an embodiment of the present disclosure, by means that the offloading card includes a controller and a hardware accelerator, where, the controller creates respective namespaces for the multiple applications according to the namespace creation request, allocates the multiple hardware queues corresponding to the created multiple namespaces from the hardware accelerator and binds the allocated multiple hardware queues respectively to the corresponding namespaces; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved.

According to the technical solution provided by an embodiment of the present disclosure, by means that the host includes a central processing unit with multiple cores, the virtual machine includes a user space and a kernel space, where the user space has the multiple applications running therein, the applications are executed by corresponding cores, where the kernel space includes a general block layer and the driver, the general block layer includes multiple software queues corresponding to the multiple cores and establishes a one-to-one corresponding relationship from the multiple software queues to the multiple hardware queues; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved.

According to the technical solution provided by an embodiment of the present disclosure, by means that the driver is an NVMe driver, the controller is an NVMe controller, where the host is connected to an NVMe device via the offloading card, where the NVMe device is mounted inside the virtual machine, where an application running in the user space issues an input/output request to the general block layer, where the input/output request is converted into an input/output request conforming with an NVMe protocol by processing of the general block layer and the NVMe driver, and the input/output request conforming with the NVMe protocol is sent to the NVMe controller, where the NVMe controller transfers the input/output request conforming with the NVMe protocol to the offloading card via the hardware queues corresponding to the created namespaces, where the offloading card sends the input/output request conforming with the NVMe protocol to the NVMe device; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved. Moreover, the existing NVMe namespace capabilities are strengthened and expanded, combined with a software-hardware integrated technical architecture, achieving significant improvements in performance isolation capability and fault isolation capability, which is fully compatible with the software ecosystem of upper level applications.

According to the technical solution provided by an embodiment of the present disclosure, by means of a method for managing a namespace of an offloading card, where the method runs in a system for managing a namespace of an offloading card, and the system for managing the namespace of the offloading card includes a host and the offloading card connected to the host, where the method includes: sending, by the host, a namespace creation request to the offloading card, based on multiple applications issuing an input/output request running on the host; creating, by the offloading card, corresponding multiple namespaces for the multiple applications, according to the namespace creation request; allocating, by the offloading card, multiple hardware queues corresponding to the created multiple namespaces according to the namespace creation request and binding the allocated multiple hardware queues respectively to the corresponding namespaces; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved. Moreover, compared to the solution that all procedures of applications share multiple hardware queues managed by a unified namespace, the solution of the embodiment of the present disclosure does not affect the applications of other hardware queues in the event of a failure occurring in a single hardware queue, and has greatly improved the performance isolation capability and the fault isolation capability.

According to the technical solution provided by an embodiment of the present disclosure, by means that the host has a virtual machine running thereon, and the multiple applications run in the virtual machine, the virtual machine includes a driver configured to manage the multiple hardware queues, where the sending, by the host, the namespace creation request to the offloading card, includes: sending, by the virtual machine, the namespace creation request to the offloading card via the driver; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved.

According to the technical solution provided by an embodiment of the present disclosure, by means that the offloading card includes a controller and a hardware accelerator, where the creating, by the offloading card, the corresponding multiple namespaces for the multiple applications, according to the namespace creation request, includes: creating, by the controller, respective namespaces for the multiple applications according to the namespace creation request, where the allocating, by the offloading card, the multiple hardware queues corresponding to the created multiple namespaces according to the namespace creation request and binding the allocated multiple hardware queues respectively to the corresponding namespaces, includes: allocating, by the controller, the multiple hardware queues corresponding to the created multiple namespaces from the hardware accelerator and binding the allocated multiple hardware queues respectively to the corresponding namespaces; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved.

According to the technical solution provided by an embodiment of the present disclosure, by means that the host includes a central processing unit with multiple cores, the virtual machine includes a user space and a kernel space, where the user space has the multiple applications running therein, the applications are executed by corresponding cores, where the kernel space includes a general block layer and the driver, the general block layer includes multiple software queues corresponding to the multiple cores and establishes a one-to-one correspondence relationship from the multiple software queues to the multiple hardware queues; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved.

According to the technical solution provided by an embodiment of the present disclosure, by means that the driver is an NVMe driver, the controller is an NVMe controller, where the host is connected to an NVMe device via the offloading card, where the method further includes: mounting the NVMe device inside the virtual machine; issuing, by an application running in the user space, an input/output request to the general block layer; converting, by processing of the general block layer and the NVMe driver, the input/output request into an input/output request conforming with an NVMe protocol, and sending the input/output request conforming with the NVMe protocol to the NVMe controller; transferring, by the NVMe controller, the input/output request conforming with the NVMe protocol to the offloading card via the hardware queues corresponding to the created namespaces; and sending, by the offloading card, the input/output request conforming with the NVMe protocol to the NVMe device; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved. Moreover, the existing NVMe namespace capabilities are strengthened and expanded, combined with a software-hardware integrated technical architecture, achieving significant improvements in performance isolation capability and fault isolation capability, which is fully compatible with the software ecosystem of upper level applications.

According to the technical solution provided by an embodiment of the present disclosure, by using the scheme for managing a namespace of an offloading card to process the input/output request, multiple namespaces can be created, and dedicated hardware queues can be dynamically allocated for respective namespaces, so that namespace resources in hardware level is achieved, an application can use its own corresponding hardware queue, the performance interference problems between input/output requests of different applications are avoided and fault isolation capability is improved, the performance isolation capability and reliability of namespaces are greatly improved. Moreover, the existing NVMe namespace capabilities are strengthened and expanded, combined with a software-hardware integrated technical architecture, achieving significant improvements in performance isolation capability and fault isolation capability, which is fully compatible with the software ecosystem of upper level applications.

It should be understood that the above general description and the subsequent detailed description are only illustrative and explanatory, and cannot limit the present disclosure.

### BRIEF DESCRIPTION OF DRAWINGS

Combined with the drawings, other features, objectives, and advantages of the present disclosure will become more apparent through the detailed description of the following non-limited implementations. In the drawings:
FIG. 1 shows an illustrated schematic diagram of an implementation scenario of a system for managing a namespace of an offloading card according to related arts.
FIG. 2 shows an illustrated schematic diagram of an implementation scenario of a system for managing a namespace of an offloading card according to an embodiment of the present disclosure.
FIG. 3 shows a block diagram of a structure of a system for managing a namespace of an offloading card according to an embodiment of the present disclosure.
FIG. 4 shows a flowchart of a method for managing a namespace of an offloading card according to an embodiment of the present disclosure.
FIG. 5 shows a block diagram of a structure of a system for processing an input/output request according to an embodiment of the present disclosure.
FIG. 6 shows a flowchart of a method for processing an input/output request according to an embodiment of the present disclosure.
FIG. 7 shows a block diagram of a structure of an electronic device according to an implementation of the present disclosure.
FIG. 8 is a schematic structural diagram of a computer system suitable for implementing methods according to respective implementations of the present disclosure.

### DESCRIPTION OF EMBODIMENTS

In the following text, exemplary embodiments of the present disclosure will be described in detail with reference to the drawings, so that those skilled in the art can easily implement them. In addition, for clarity, sections unrelated to the description of the exemplary embodiments have been omitted in the drawings.

In the present disclosure, it should be understood that terms such as "including" or "having" are intended to indicate the presence of features, numbers, steps, actions, components, portions, or combinations thereof disclosed in the present specification, and are not intended to exclude the possibility of one or more other features, numbers, steps, actions, components, portions, or combinations thereof being present or added.

In the present disclosure, the acquisition of user information or user data is authorized, confirmed, or voluntarily selected by user(s).

In addition, it should be also noted that embodiments and features of the embodiments in the present disclosure can be combined with each other in the absence of conflict. In the below, the present disclosure will be explained in detail with reference to the accompanying drawings and in conjunction with embodiments.

The following provides a brief description of the terms that may be involved in embodiments of the present disclosure.

DMA (Direct Memory Access): direct memory access is a memory access technique in computer science. It allows certain hardware subsystems inside the computer (computer peripherals) to be able to independently read and write system memory directly without the intervention processing from a central processing unit (CPU). DMA is a fast data transfer method under processor burden in the same level. Many hardware systems use DMA, including hard drive controllers, graphics cards, network adapters, and audio cards.

Offloading card (offloading card): it implements, by hardware, functions that were originally implemented by software; in this way, it allows some data processing that was originally done on an operating system to be done on hardware, and reduces system CPU consumption while improving processing performance.

PCIe (Peripheral Component Interconnect express): it is a high-speed serial computer expansion bus standard that follows existing PCI programming concepts and signal standards, and builds a higher speed serial communication system standard.

FPGA (Field-Programmable Gate Array): field-programmable logic gate array is developed on the technology basis of PAL, GAL, CPLD, and other programmable logic devices. As a kind of semi-customized circuit in dedicated integrated circuits, it not only compensates for the shortcomings of dedicated integrated circuits, but also overcomes the limitation of limited quantity of gate circuits in original programmable logic devices.

ASIC (Application Specific Integrated Circuit): it refers to an integrated circuit with special specification that is fully customized according to different product requirements, and is an integrated circuit product that is different from standard industrial ICs.

ioctl (input/output control): input/output control is a function, that is called by a system and specifically for input/output operations of a device, and it passes in a request code related to the device, and the functionality called by the system depends entirely on the request code. ioctl is a function that manages the I/O channels of the device in the device driver program.

As mentioned above, currently, the namespace (namespace) technology has been adopted to perform space partition/management on the NVME storage, mainly configured to, for different applications, partition disk logical space and establish security isolation mechanisms. Different namespaces are isolated using software technology and share some hardware resources, such as hardware queues, which may cause performance interference problems and relatively poor fault isolation capability. In addition to providing the functionality of space partition, the namespace technology allows each namespace to have independent formatting and encryption capabilities, which is equivalent to independent configuration functionality.

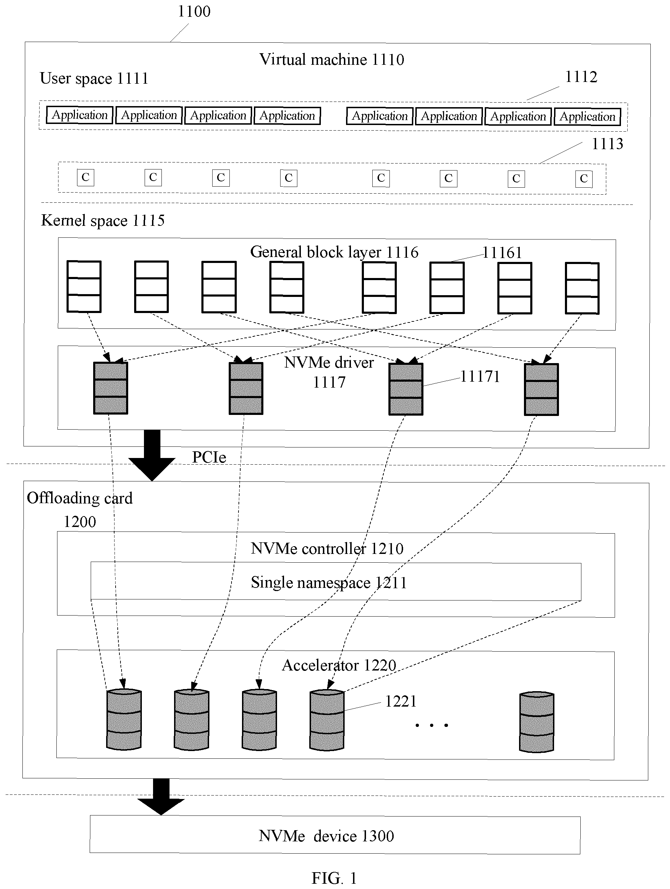

In the bellow, a system for managing a namespace of an offloading card in related arts is described with reference to FIG. 1. FIG. 1 shows an illustrated schematic diagram of an implementation scenario of a system for managing namespace of an offloading card according to related arts.

As shown in FIG. 1, the system for managing namespace of an offloading card in the related arts can adopt an architecture of hardware offloading (offloading), the system may include a host 1100 and an offloading card 1200. The host 1100 can access an NVMe device 1300 via the offloading card 1200. The offloading card 1200 and the NVMe device 1300 can be used together as a storage system. The offloading card 1200 and the NVMe device 1300 can be connected through a PCIe interface. The specific specification of the PCIe interface can be acquired from related arts, which will not be elaborated in the present disclosure.

As shown in FIG. 1, the host 1100 has a virtual machine 1110 running thereon, the virtual machine 1110 may include a user space (user space) 1111 and a kernel space (kernel space) 1115. In an embodiment of the present disclosure, the virtual machine 1110 may be a Linux virtual machine. In an embodiment of the present disclosure, the user space 1111 has an application 1112 (or a thread of an application) running therein, and the application 1112 issues data via a core 1113 of a central processing unit (CPU). The kernel space 1115 of the virtual machine 1110 has a general block layer (Blk-mq in the Linux kernel) 1116. The general block layer 1116 provides a software queue for the upper-layer application 1112, each core 1113 of CPU corresponds to one software queue 11161. The kernel space 1115 of the virtual machine 1110 also has a driver (e.g. an NVMe driver) 1117, configured to maintain and manage a hardware queue 11171, and be capable of issuing an input output (IO, Input Output) request to a specific physical hardware (e.g. an offloading card) by a manner, for example, setting a hardware register, for processing. The general block layer 1116 can maintain a mapping relationship from the software queues 11161 to the hardware queues 11171. The software queue 11161 can be configured to transfer the data issued by the core 1113 of CPU. The hardware queue 11171 is configured to transfer data that is required to be issued to the NVMe device.

In the system for managing the namespace of the offloading card in the related arts, since the general block layer 1116 needs to interact with a hardware via the NVMe driver 1117, the hardware also needs to support multiple queues. The most ideal scenario is that there are enough queues supported by the hardware, and each software queue 11161 of the general block layer 1116 has a hardware queue 11171 associated with it. However, the hardware queue supported by hardware in the related arts is limited, resulting in the correlation relationship formed as shown in FIG. 1. In FIG. 1, there are four hardware queues 11171, but the general block layer 1116 forms a total of eight software queues 11161. Therefore, the general block layer 1116 makes two software queues 11161 associated with one hardware queue 11171, i.e. establishing a mapping relationship from two software queues 11161 to one hardware queue 11171.

In the system for managing the namespace of the offloading card in the related arts, the offloading card 1200 includes an NVMe controller 1210 and an accelerator 1220. The offloading card 1200 can simulate a standard NVMe controller 1210 according to software and hardware technology, in charge of processing a configuration request of the NVMe driver 1117 in the kernel space 1115 in the virtual machine 1110 and completing the management task, such as initialization and mounting/unmounting of the NVMe device 1300, etc. The accelerator 1220, for example, is an accelerator based on FPGA hardware or ASIC hardware, in charge of transferring the 10 request in the virtual machine 1110 to the offloading card 1200 in a DMA manner and sending the request to the NVMe device 1300 via a network card, PCI, and other connection manners. For example, in the offloading card 1200, four hardware queues 11171 included in the NVMe controller 1210 are pre-allocated corresponding to the hardware portion 1221 in the accelerator 1220, and managed by a namespace 1211.

In the system for managing the namespace of the offloading card in the related arts, the NVMe controller 1210 manages the disk space of the device 1300 and block device related attributes, such as sector size, capacity, etc. through a namespace. In the offloading card 1200, an NVMe controller 1210 can include four hardware queues, managed in unity by a namespace 1211. The NVMe controller 1210 in the related arts may actually include more hardware queues, but the core problem lies in that even if a quantity of hardware queues can match a quantity of applications, it cannot allocate an independent hardware queue for each application by partitioning the namespace. All processes of applications share the hardware queues of the NVMe controller 1210, and different applications on the namespace 1211 of the NVMe controller 1210 will share the hardware resources of the NVMe device 1300, resulting in certain problems of performance resource competition and weak fault isolation capability.

In the circumstance of processing the IO request using the system for managing the namespace of the offloading card in the related arts, the application 1112 in the virtual machine 1110 can issue the IO request to the general block layer 1116 in the kernel space 1115 through a system call interface. The general block layer 1116 in the kernel space 1115 receives the IO request, and encapsulates it into a bio request (a request of the general block layer). The NVMe driver 1117 is in charge of transforming the bio request into an IO request conforming with the NVMe protocols, and can issue the IO request conforming with the NVMe protocols via a hardware register of a device. The NVMe driver 1117 can inform the NVMe controller 1210 on the offloading card 1200 to process the IO request conforming with the NVMe protocols by setting the hardware register. The accelerator 1220 transfers the IO request of the virtual machine 1110 to the offloading card 1200 in a DMA manner and sending the IO request to the NVMe device 1300 through a network card, PCI, and other interfaces.

In the procedure of processing the IO request using the system for managing the namespace of the offloading card in the related arts, the hardware queues of the NVMe device 1300 are managed in unity by a namespace, different applications share the hardware queue resources, which has performance interference problems and relatively poor fault isolation capability. For example, an application A is a low latency IO model, an application B is a high-throughput IO model, if they share one hardware queue, a problem that an IO request of the application A is slowed down by the application B will be caused. In certain circumstances, a failure of a single hardware queue can cause all application IOs to be hang-up, with a large impact range and poor fault isolation capability.

In order to solve the problems mentioned above, the present disclosure proposes a system and a method for managing a namespace of an offloading card and processing an input/output request.

According to the technical solution provided by an embodiment of the present disclosure, by means of the system for managing the namespace of the offloading card, which includes a host and the offloading card connected to the host, where, the host has multiple applications issuing an input/output request running thereon, and the host sends a namespace creation request to the offloading card, the offloading card creates corresponding multiple namespaces for the multiple applications according to the namespace creation request, the offloading card allocates multiple hardware queues corresponding to the created multiple namespaces according to the namespace creation request and binds the allocated multiple hardware queues respectively to the corresponding namespaces; multiple namespaces can be created, and dedicated hardware queues can be dynamically allocated for respective namespaces, so that namespace resources in hardware level is achieved, an application can use its own corresponding hardware queue, the performance isolation capability and reliability of the namespaces are greatly improved. Moreover, compared to the solution in the related arts that it cannot allocate an independent hardware queue for each application, the solution of the embodiment of the present disclosure does not affect the applications of other hardware queues in the event of a failure occurring in a single hardware queue, and has greatly improved the performance isolation capability and the fault isolation capability.

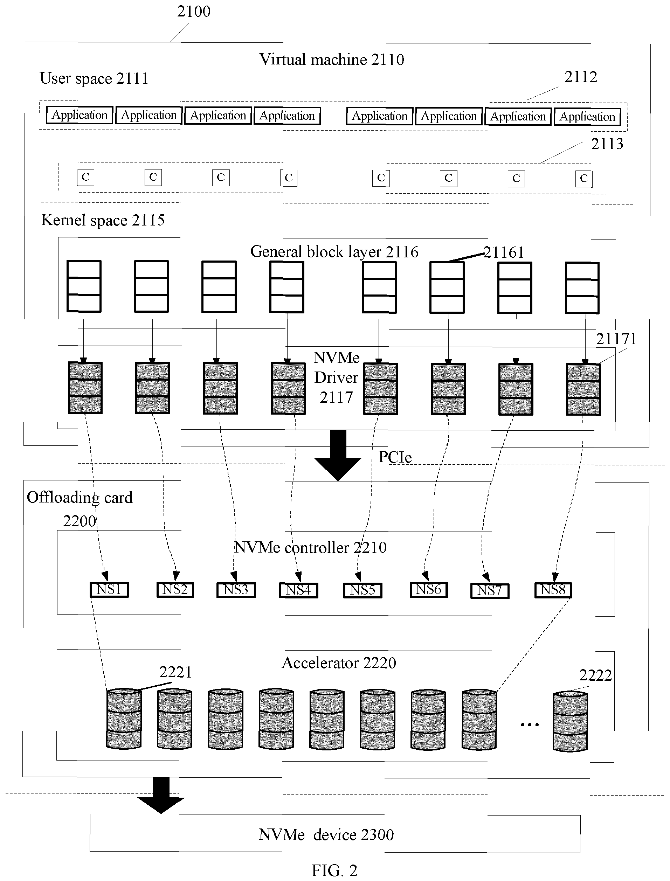

In the bellow, an implementation scenario of a system for managing a namespace of an offloading card according to an embodiment of the present disclosure is described with reference to FIG. 2. FIG. 2 shows an illustrated schematic diagram of an implementation scenario of a system for managing a namespace of an offloading card according to an embodiment of the present disclosure.

As shown in FIG. 2, the system for managing the namespace of the offloading card according to the embodiment of the present disclosure is similar to the system for managing the namespace of the offloading card in the related arts, and can adopt an architecture of hardware offloading (offloading), the system may include a host 2100 and an offloading card 2200. The host 2100 can access an NVMe device 2300 via the offloading card 2200. The offloading card 2200 and the NVMe device 2300 can be used together as a storage system. The offloading card 2200 and the NVMe device 2300 can be connected through a PCIe interface. The specific specification of the PCIe interface can be acquired from related arts, which will not be elaborated in the present disclosure.

As shown in FIG. 2, the host 2100 has a virtual machine 2110 running thereon, the virtual machine 2110 may include a user space (user space) 2111 and a kernel space (kernel space) 2115. In an embodiment of the present disclosure, the virtual machine 2110 may be a Linux virtual machine. In an embodiment of the present disclosure, the user space 2111 has an application 2112 (or a thread of an application) running therein, and the application 2112 issues data via a core 2113 of a central processing unit (CPU). The kernel space 2115 of the virtual machine 2110 has a general block layer (Blk-mq in the Linux kernel) 2116. The general block layer 2116 provides a software queue for the upper-layer application 2112, each core 2113 of CPU corresponds to one software queue 21161. The kernel space 2115 of the virtual machine 2110 also has a driver (e.g. an NVMe driver) 2117, configured to maintain and manage a hardware queue 21171, and be capable of issuing an input/output (IO, Input Output) request to a specific physical hardware (e.g. an offloading card) by a manner, for example, setting a hardware register, for processing. The general block layer 2116 can maintain a mapping relationship from the software queues 21161 to the hardware queues 21171. The software queue 21161 can be configured to transfer the data issued by the core 2113 of CPU. The hardware queue 21171 is configured to transfer data that is required to be issued to the NVMe device.

In the system for managing the namespace of the offloading card according to the embodiment of the present disclosure, since the general block layer 2116 needs to interact with a hardware via the NVMe driver 2117, the hardware also needs to support multiple queues. The most ideal scenario is that there are enough queues supported by the hardware, and each software queue 11161 of the general block layer 2116 has a hardware queue 21171 associated with itself. In FIG. 2, there are eight hardware queues 21171, and the general block layer 2116 forms a total of eight software queues 11161. Therefore, the general block layer 2116 associates one software queues 21161 and one hardware queue 21171, i.e. establishing a one-to-one mapping relationship from software queues 11161 to hardware queues 11171. The specific manner of using the offloading card to create multiple name spaces to allocate hardware queues is described in the below.

In the system for managing the namespace of the offloading card according to the embodiment of the present disclosure, the offloading card 2200 includes an NVMe controller 2210 and an accelerator 2220. The offloading card 2200 can simulate a standard NVMe controller 2210 according to software and hardware technology, in charge of processing configuration request of the NVMe driver 2117 in the kernel space 2115 in the virtual machine 2110 and completing the management task, such as initialization and mounting/unmounting of the NVMe device 2300, etc. The accelerator 2220, for example, is an accelerator based on FPGA hardware or ASIC hardware, in charge of transferring the IO request in the virtual machine 2110 to the offloading card 2200 in a DMA manner and sending the IO request to the NVMe device 2300 via a network card, PCI, and other connection manners.

In the system for managing the namespace of the offloading card according to the embodiment of the present disclosure, the NVMe device 2300 can be mounted inside the virtual machine 2110. An independent namespace for each application 2112 can be created within the virtual machine 2110 via a tool, such as nvme-cli (a command-line tool for monitoring and configuring an NVMe device in Linux), etc. Specifically, the virtual machine 2110 can issue an NVMe Admin Command command to the NVMe driver 2117 via calling of the ioctl system, specifically a namespace creation request (also referred as a request for creating a namespace). After receiving the namespace creation request, the NVMe driver 2117 can send the namespace creation request to the offloading card 2200. For example, the NVMe driver 2117 can send the namespace creation request to the offloading card 2200 by a manner of setting a hardware register to send a configuration information request to the offloading card 2200. After receiving the namespace creation request, the NVMe controller 2210 on the offloading card 2200 creates corresponding namespaces NS1, NS2, MS3, NS4, NS5, NS6, NS7, and NS8 for respective applications 2112, and allocates hardware queues 21171 from the corresponding hardware portion 2221 of the accelerator 2220 and respectively binds them to the created namespaces NS1, NS2, MS3, NS4, NS5, NS6, NS7, and NS8. For example, in the offloading card 2200, the NVMe controller 2210 allocates, according to the namespace creation request, 8 hardware queues 21171 from the corresponding hardware portion 2221 of the accelerator 2220 which are managed respectively by the eight namespaces NS1, NS2, MS3, NS4, NS5, NS6, NS7, and NS8. Hardware portions 2222 other than the hardware portion 2221 in the accelerator 2220 are not allocated to be managed by the namespaces NS1, NS2, NS3, NS4, NS5, NS6, NS7, NS8.

It can be seen from FIG. 2, one application 2112 corresponds to one software queue 21161 and corresponds to one hardware queue 21171, one hardware queue 21171 is managed by one namespace bound to it. Therefore, in the system for managing the namespace of the offloading card according to the embodiment of the present disclosure, dedicated hardware queues can be dynamically allocated for respective NVMe namespaces, namespace resources in hardware level can be achieved, and the performance isolation capability and reliability of the namespaces are greatly improved. Compared to the system for managing the namespace of the offloading card in the related arts, the performance isolation capability and the fault isolation capability have been greatly improved. Moreover, with the development of hardware offloading technology, existing offloading cards can now support one thousand or thousands of hardware queues. The system for managing the namespace of the offloading card according to the embodiment of the present disclosure adopts a technical architecture that combines software and hardware, supports a device form with multiple namespaces, and allocates an independent hardware queue for each namespace, so that the interference problems between IO requests of different applications are avoided and fault isolation capability is improved.

In the circumstance of processing the IO request using the system for managing the namespace of the offloading card according to the embodiment of the present disclosure, the application 2112 in the virtual machine 2110 can issue the IO request to the general block layer 2116 in the kernel space 2115 through a system call interface. The general block layer 1116 in the kernel space 2115 receives the IO request, and encapsulates it into a bio request (a request of the general block layer). The NVMe driver 2117 is in charge of transforming the bio request into an IO request conforming with the NVMe protocols, and can issue the IO request conforming with the NVMe protocols via a hardware register of a device. The NVMe driver 2117 can inform the NVMe controller 2210 on the offloading card 2200 to process the IO request conforming with the NVMe protocols by setting the hardware register. The accelerator 2220 transfers the IO request of the virtual machine 2110 to the offloading card 2200 in a DMA manner via an independent hardware queue (i.e. a hardware queue corresponding one-to-one to a respective namespace) 21171 and sending the IO request to the NVMe device 2300 through a network card, PCI, and other interfaces.

In the system for managing the namespace of the offloading card according to the embodiment of the present disclosure, as same as the system for managing the namespace of the offloading card in the related arts, each core 2113 of CPU corresponds to one software queue 21161. However, in the general block layer 2116, unlike the system for managing the namespace of the offloading card in the related arts, what does the driver 2117 manage and maintain is, rather than a pre-set hardware queue, a hardware queue allocated from the accelerator 2220 by the NVMe controller 2210 of the offloading card 2200 after creating multiple namespaces, whose quantity is equal to the quantity of the software queues, according to the namespace creating request according to the namespace creating request. A quantity of hardware queues 21171 can be the same as that of the software queues 21161, and the two can correspond one-to-one. In this way, the hardware queues of the NVMe device 2300 are managed by independent namespaces respectively, and different applications use their own hardware queue resources, result in eliminating performance interference and having good fault isolation capabilities.

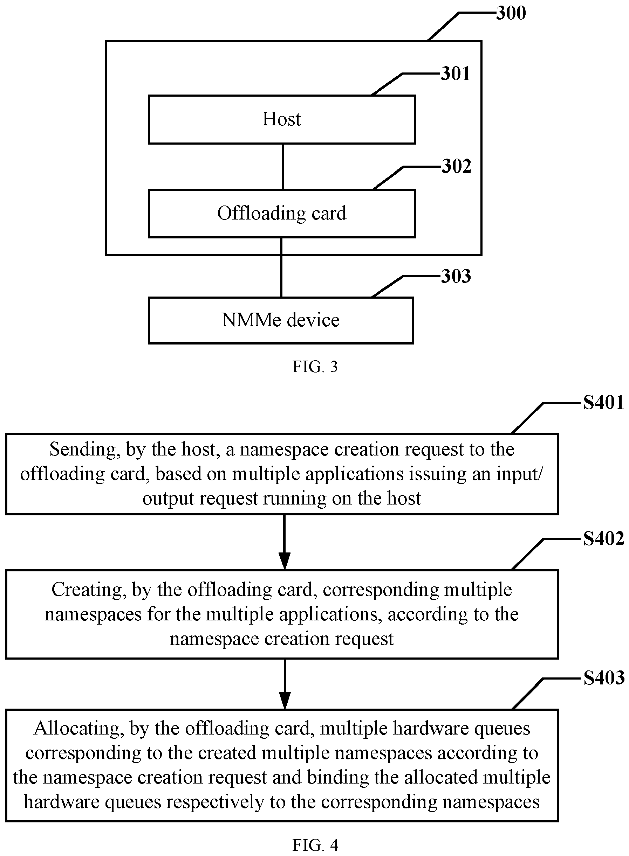

In the bellow, a system for managing a namespace of an offloading card according to an embodiment of the present disclosure is described with reference to FIG. 3. FIG. 3 shows a block diagram of a structure of a system for managing a namespace of an offloading card 300 according to an embodiment of the present disclosure.

The system for managing the namespace of the offloading card 300 as shown in FIG. 3 includes a host 301 and an offloading card 302; where, the host 301 has multiple applications issuing an input/output request running thereon, and the host 301 sends a namespace creation request to the offloading card 302, the offloading card 302 creates corresponding multiple namespaces for the multiple applications according to the namespace creation request, the offloading card 302 allocates multiple hardware queues corresponding to the created multiple namespaces according to the namespace creation request and binds the allocated multiple hardware queues respectively to the corresponding namespaces.

According to the technical solution provided by an embodiment of the present disclosure, by means of the system for managing the namespace of the offloading card, which includes a host and the offloading card connected to the host, where, the host has multiple applications issuing an input/output request running thereon, and the host sends a namespace creation request to the offloading card, the offloading card creates corresponding multiple namespaces for the multiple applications according to the namespace creation request, the offloading card allocates multiple hardware queues corresponding to the created multiple namespaces according to the namespace creation request and binds the allocated multiple hardware queues respectively to the corresponding namespaces; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved. Moreover, compared to the solution that all procedures of applications share multiple hardware queues managed in unity by a namespace, the solution of the embodiment of the present disclosure does not affect the applications of other hardware queues in the event of a failure occurring in a single hardware queue, and has greatly improved the performance isolation capability and the fault isolation capability.

In an embodiment of the present disclosure, the host 301 has a virtual machine running thereon, and the multiple applications run in the virtual machine, the virtual machine includes: a driver, configured to manage the multiple hardware queues, where the virtual machine sends the namespace creation request to the offloading card 302 via the driver.

According to the technical solution provided by an embodiment of the present disclosure, by means that the host has a virtual machine running thereon, and the multiple applications run in the virtual machine, the virtual machine includes: a driver, configured to manage the multiple hardware queues, where the virtual machine sends the namespace creation request to the offloading card via the driver; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved.

In an embodiment of the present disclosure, the offloading card 302 includes a controller and a hardware accelerator, where the controller creates respective namespaces for the multiple applications according to the namespace creation request, allocates the multiple hardware queues corresponding to the created multiple namespaces from the hardware accelerator and binds the allocated multiple hardware queues respectively to the corresponding namespaces.

According to the technical solution provided by an embodiment of the present disclosure, by means that the offloading card includes a controller and a hardware accelerator, where the controller creates respective namespaces for the multiple applications according to the namespace creation request, allocates the multiple hardware queues corresponding to the created multiple namespaces from the hardware accelerator and binds the allocated multiple hardware queues respectively to the corresponding namespaces; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved.

In an embodiment of the present disclosure, the host 301 includes a central processing unit with multiple cores, the virtual machine includes a user space and a kernel space, where the user space has the multiple applications running therein, the applications are executed by corresponding cores, where the kernel space includes a general block layer and the driver, the general block layer includes multiple software queues corresponding to the multiple cores and establishes a one-to-one corresponding relationship from the multiple software queues to the multiple hardware queues.

According to the technical solution provided by an embodiment of the present disclosure, by means that the host includes a central processing unit with multiple cores, the virtual machine includes a user space and a kernel space, where the user space has the multiple applications running therein, the applications are executed by corresponding cores, where the kernel space includes a general block layer and the driver, the general block layer includes multiple software queues corresponding to the multiple cores and establishes a one-to-one corresponding relationship from the multiple software queues to the multiple hardware queues; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved.

In an embodiment of the present disclosure, the driver is an NVMe driver, the controller is an NVMe controller, where the host 301 is connected to an NVMe device 303 via the offloading card 302, where the NVMe device 303 is mounted inside the virtual machine, where an application running in the user space issues an input/output request to the general block layer, where the input/output request is converted into an input/output request conforming with an NVMe protocol by processing of the general block layer and the NVMe driver, and the input/output request conforming with the NVMe protocol is sent to the NVMe controller, where the NVMe controller transfers the input/output request conforming with the NVMe protocol to the offloading card 302 via the hardware queues corresponding to the created namespaces, where the offloading card 302 sends the input/output request conforming with the NVMe protocol to the NVMe device 303.

In an embodiment of the present disclosure, a specific manner for the input/output request being converted into an input/output request conforming with an NVMe protocol by processing of the general block layer and the NVMe driver, and the input/output request conforming with the NVMe protocol being sent to the NVMe controller may include: the general block layer converts the input/output request issued by an application into an input/output request conforming with general block device protocols (e.g. bio structure), and the NVMe driver converts the input/output request conforming with the general block device protocols into the input/output request conforming with NVMe protocols and issues the input/output request via a hardware register of a device.

According to the technical solution provided by an embodiment of the present disclosure, by means that the driver is an NVMe driver, the controller is an NVMe controller, where the host is connected to an NVMe device via the offloading card, where the NVMe device is mounted inside the virtual machine, where an application running in the user space issues an input/output request to the general block layer, where the input/output request is converted into an input/output request conforming with an NVMe protocol by processing of the general block layer and the NVMe driver, and the input/output request conforming with the NVMe protocol is sent to the NVMe controller, where the NVMe controller transfers the input/output request conforming with the NVMe protocol to the offloading card via the hardware queues corresponding to the created namespaces, where the offloading card sends the input/output request conforming with the NVMe protocol to the NVMe device; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved. Moreover, the existing NVMe namespace capabilities are strengthened and expanded, combined with a software-hardware integrated technical architecture, achieving significant improvements in performance isolation capability and fault isolation capability, which is fully compatible with the software ecosystem of upper level applications.

Those skilled in the art can understand that the technical solution described with reference to FIG. 3 can be combined with the implementation scenarios described with reference to FIG. 1 and FIG. 2, thereby achieving the technical effects achieved by the implementation scenarios described with reference to FIG. 1 and FIG. 2. The specific content can refer to the description according to FIG. 1 and FIG. 2 above, and the specific content will not be elaborated here.

In the bellow, a method for managing a namespace of an offloading card according to an embodiment of the present disclosure is described with reference to FIG. 4.

FIG. 4 shows a flowchart of a method for managing a namespace of an offloading card according to an embodiment of the present disclosure.

The method for managing the namespace of the offloading card according to the embodiment of the present disclosure as shown in FIG. 4 runs in a system for managing a namespace of an offloading card, the system for managing the namespace of the offloading card includes a host and the offloading card connected to the host. The system for managing the namespace of the offloading card is the system for managing the namespace of the offloading card described with reference to FIG. 3.

As shown in FIG. 4, the method for managing the namespace of the offloading card according to the embodiment of the present disclosure includes steps S401, S402, and S403.

In step S401, sending, by the host, a namespace creation request to the offloading card, based on multiple applications issuing an input/output request running on the host.

In step S402, creating, by the offloading card, corresponding multiple namespaces for the multiple applications, according to the namespace creation request.

In step S403, allocating, by the offloading card, multiple hardware queues corresponding to the created multiple namespaces according to the namespace creation request and binding the allocated multiple hardware queues respectively to the corresponding namespaces.

In an embodiment of the present disclosure, the host has a virtual machine running thereon, and the multiple applications run in the virtual machine, the virtual machine includes a driver configured to manage the multiple hardware queues, where the sending, by the host, the namespace creation request to the offloading card, includes: sending, by the virtual machine, the namespace creation request to the offloading card via the driver.

According to the technical solution provided by an embodiment of the present disclosure, by means that the host has a virtual machine running thereon, and the multiple applications run in the virtual machine, the virtual machine includes a driver configured to manage the multiple hardware queues, where the sending, by the host, the namespace creation request to the offloading card, includes: sending, by the virtual machine, the namespace creation request to the offloading card via the driver; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved.

In an embodiment of the present disclosure, the offloading card includes a controller and a hardware accelerator, where the step S402 includes: creating, by the controller, respective namespaces for the multiple applications according to the namespace creation request, where the allocating, by the offloading card, the multiple hardware queues corresponding to the created multiple namespaces according to the namespace creation request and binding the allocated multiple hardware queues respectively to the corresponding namespaces, includes: allocating, by the controller, the multiple hardware queues corresponding to the created multiple namespaces from the hardware accelerator and binding the allocated multiple hardware queues respectively to the corresponding namespaces.

According to the technical solution provided by an embodiment of the present disclosure, by means that the offloading card includes a controller and a hardware accelerator, where the creating, by the offloading card, the corresponding multiple namespaces for the multiple applications, according to the namespace creation request, includes: creating, by the controller, respective namespaces for the multiple applications according to the namespace creation request, where the allocating, by the offloading card, the multiple hardware queues corresponding to the created multiple namespaces according to the namespace creation request and binding the allocated multiple hardware queues respectively to the corresponding namespaces, includes: allocating, by the controller, the multiple hardware queues corresponding to the created multiple namespaces from the hardware accelerator and binding the allocated multiple hardware queues respectively to the corresponding namespaces; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved.

In an embodiment of the present disclosure, the host includes a central processing unit with multiple cores, the virtual machine includes a user space and a kernel space, where the user space has the multiple applications running therein, the applications are executed by corresponding cores, where the kernel space includes a general block layer and the driver, the general block layer includes multiple software queues corresponding to the multiple cores and establishes a one-to-one corresponding relationship from the multiple software queues to the multiple hardware queues.

According to the technical solution provided by an embodiment of the present disclosure, by means that the host includes a central processing unit with multiple cores, the virtual machine includes a user space and a kernel space, where the user space has the multiple applications running therein, the applications are executed by corresponding cores, where the kernel space includes a general block layer and the driver, the general block layer includes multiple software queues corresponding to the multiple cores and establishes a one-to-one corresponding relationship from the multiple software queues to the multiple hardware queues; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved.

In an embodiment of the present disclosure, the driver is an NVMe driver, the controller is an NVMe controller, where the host is connected to an NVMe device via the offloading card, where the method further includes: mounting the NVMe device inside the virtual machine;
issuing, by an application running in the user space, an input/output request to the general block layer; converting, by processing of the general block layer and the NVMe driver, the input/output request into an input/output request conforming with an NVMe protocol, and sending the input/output request conforming with the NVMe protocol to the NVMe controller; transferring, by the NVMe controller, the input/output request conforming with the NVMe protocol to the offloading card via the hardware queues corresponding to the created namespaces; and sending, by the offloading card, the input/output request conforming with the NVMe protocol to the NVMe device.

According to the technical solution provided by an embodiment of the present disclosure, by means that the driver is an NVMe driver, the controller is an NVMe controller, where the host is connected to an NVMe device via the offloading card, where the method further includes: mounting the NVMe device inside the virtual machine; issuing, by an application running in the user space, an input/output request to the general block layer; converting, by processing of the general block layer and the NVMe driver, the input/output request into an input/output request conforming with an NVMe protocol, and sending the input/output request conforming with the NVMe protocol to the NVMe controller; transferring, by the NVMe controller, the input/output request conforming with the NVMe protocol to the offloading card via the hardware queues corresponding to the created namespaces; and sending, by the offloading card, the input/output request conforming with the NVMe protocol to the NVMe device; multiple namespaces can be created, and dedicated hardware queues can be dynamically allocated for respective namespaces, so that namespace resources in hardware level is achieved, an application can use its own corresponding hardware queue, the performance isolation capability and reliability of namespaces are greatly improved. Moreover, the existing NVMe namespace capabilities are strengthened and expanded, combined with a software-hardware integrated technical architecture, achieving significant improvements in performance isolation capability and fault isolation capability, which is fully compatible with the software ecosystem of upper level applications.

Those skilled in the art can understand that the technical solution described with reference to FIG. 4 can be combined with the implementation scenarios described with reference to FIG. 1 to FIG. 3, thereby achieving the technical effects achieved by the implementation scenarios described with reference to FIG. 1 to FIG. 3. The specific content can refer to the description according to FIG. 1 to FIG. 3 above, and the specific content will not be elaborated here.

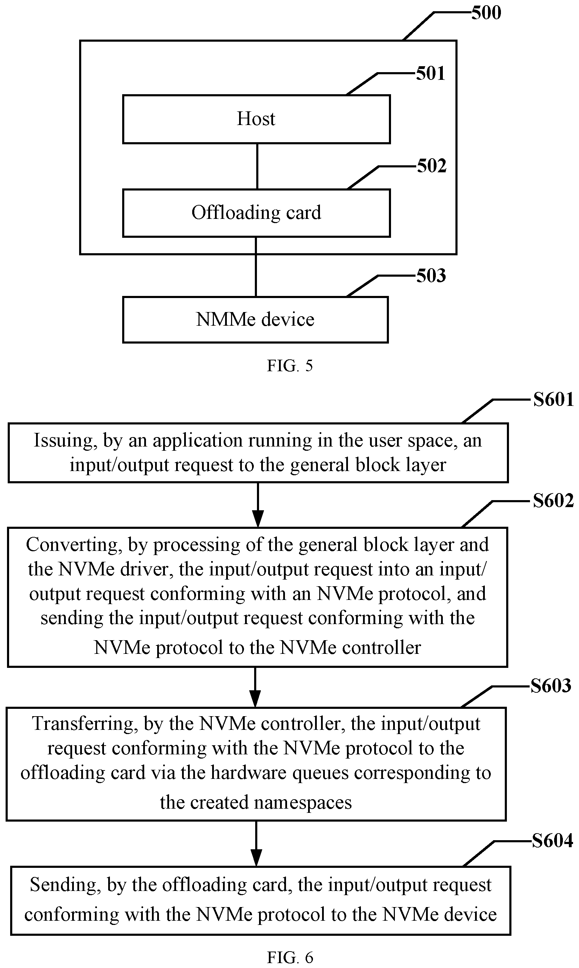

In the bellow, a system for processing an input/output request according to an embodiment of the present disclosure is described with reference to FIG. 5.

FIG. 5 shows a block diagram of a structure of a system for processing an input/output request 500 according to an embodiment of the present disclosure. The system for processing the input/output request 500 is achieved by using the system for managing the namespace of the offloading card 300 as shown in FIG. 3.

As shown in FIG. 5, the system for processing the input/output request 500 includes a host 501, an offloading card 5022, and an NVMe device 503 connected to the host 501 via the offloading card 502.

The host 501 has a virtual machine running thereon, the host 501 includes a central processing unit with multiple cores, the virtual machine includes a user space and a kernel space, where the user space has multiple applications issuing an input/output request running therein, the applications are executed by corresponding cores, the kernel space includes a general block layer and an NVMe driver, the general block layer includes multiple software queues corresponding to the multiple cores, the virtual machine sends a namespace creation request to the offloading card 502 via the NVMe driver.

The offloading card 502 includes an NVMe controller and a hardware accelerator, where the NVMe controller creates respective namespaces for the multiple applications according to the namespace creation request, allocates multiple hardware queues corresponding to the created multiple namespaces from the hardware accelerator and binds the allocated multiple hardware queues respectively to the corresponding namespaces,
where the NVMe driver is configured to manage the multiple hardware queues, the general block layer establishes a one-to-one corresponding relationship from the multiple software queues to the multiple hardware queues,
where an application running in the user space issues an input/output request to the general block layer,
where the input/output request is converted into an input/output request conforming with an NVMe protocol by processing of the general block layer and the NVMe driver, and the input/output request conforming with the NVMe protocol is sent to the NVMe controller,
where the NVMe controller transfers the input/output request conforming with the NVMe protocol to the offloading card 502 via the hardware queues corresponding to the created namespaces, and
where the offloading card 502 sends the input/output request conforming with the NVMe protocol to the NVMe device 503.

According to the technical solution provided by an embodiment of the present disclosure, by using the scheme for the namespace management of the offloading card to process the input/output request, multiple namespaces can be created, and dedicated hardware queues can be dynamically allocated for respective namespaces, so that namespace resources in hardware level is achieved, an application can use its own corresponding hardware queue, the performance interference problems between input/output requests of different applications are avoided and fault isolation capability is improved, the performance isolation capability and reliability of namespaces are greatly improved. Moreover, the existing NVMe namespace capabilities are strengthened and expanded, combined with a software-hardware integrated technical architecture, achieving significant improvements in performance isolation capability and fault isolation capability, which is fully compatible with the software ecosystem of upper level applications.

In the bellow, a method for processing an input/output request according to an embodiment of the present disclosure is described with reference to FIG. 6.

FIG. 6 shows a flowchart of a method for processing an input/output request according to an embodiment of the present disclosure. The method for processing the input/output request as shown in FIG. 6 is achieved by using the system for processing the input/output request 500 as shown in FIG. 5. The system for processing the input/output request 500 is achieved by using the system for managing the namespace of the offloading card 300 as shown in FIG. 3.

The system for processing the input/output request having the method for processing the input/output request running therein includes a host, an offloading card, and an NVMe device connected to the host via the offloading card,
where the host has a virtual machine running thereon, the host includes a central processing unit with multiple cores, the virtual machine includes a user space and a kernel space, where the user space has multiple applications issuing an input/output request running therein, the applications are executed by corresponding cores, the kernel space includes a general block layer and an NVMe driver, the general block layer includes multiple software queues corresponding to the multiple cores, the virtual machine sends a namespace creation request to the offloading card via the NVMe driver,
where the offloading card includes an NVMe controller and a hardware accelerator, the NVMe controller creates respective namespaces for the multiple applications according to the namespace creation request, allocates multiple hardware queues corresponding to the created multiple namespaces from the hardware accelerator and binds the allocated multiple hardware queues respectively to the corresponding namespaces,
where the NVMe driver is configured to manage the multiple hardware queues, the general block layer establishes a one-to-one correspondence relationship from the multiple software queues to the multiple hardware queues.

The method includes steps S601, S602, S603, and S604.

In step S601, issuing, by an application running in the user space, an input/output request to the general block layer.

In step S602, converting, by processing of the general block layer and the NVMe driver, the input/output request into an input/output request conforming with an NVMe protocol, and sending the input/output request conforming with the NVMe protocol to the NVMe controller.

In step S603, transferring, by the NVMe controller, the input/output request conforming with the NVMe protocol to the offloading card via the hardware queues corresponding to the created namespaces.

In step S604, sending, by the offloading card, the input/output request conforming with the NVMe protocol to the NVMe device.

According to the technical solution provided by an embodiment of the present disclosure, by using the scheme for managing the namespace of the offloading card to process the input/output request, multiple namespaces can be created, and dedicated hardware queues can be dynamically allocated for respective namespaces, so that namespace resources in hardware level is achieved, an application can use its own corresponding hardware queue, the performance interference problems between input/output requests of different applications are avoided and fault isolation capability is improved, the performance isolation capability and reliability of namespaces are greatly improved. Moreover, the existing NVMe namespace capabilities are strengthened and expanded, combined with a software-hardware integrated technical architecture, achieving significant improvements in performance isolation capability and fault isolation capability, which is fully compatible with the software ecosystem of upper level applications.

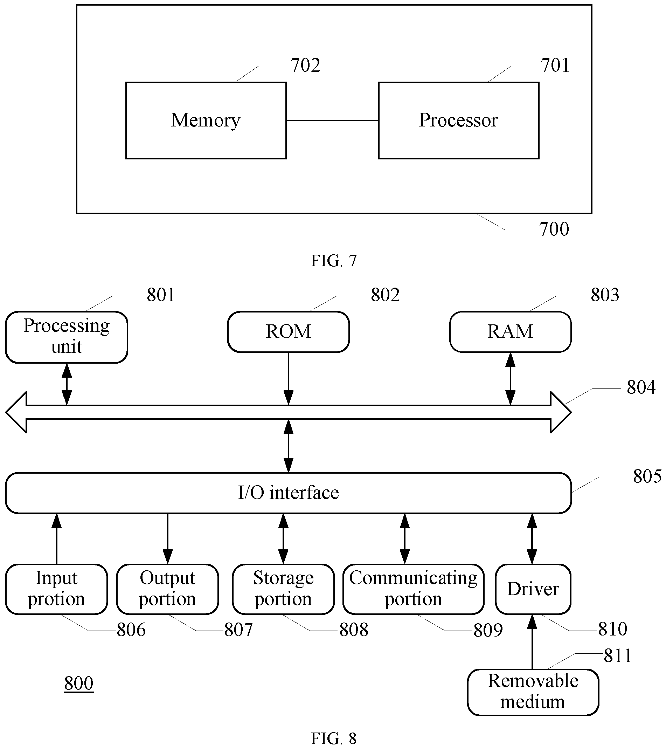

FIG. 7 shows a block diagram of a structure of an electronic device according to an implementation of the present disclosure.

An implementation of the present disclosure also provides an electronic device, as shown in FIG. 7, including at least one processor 701; and a memory 702 connected in communication with at least one processor 701; where, the memory 702 stores instructions that can be executed by at least one processor 701; the instructions run in a system for managing a namespace of an offloading card where the system for managing the namespace of the offloading card includes a host and the offloading card connected to the host; the instructions are executed by at least one processor 701 to implement following steps:
sending, by the host, a namespace creation request to the offloading card, based on multiple applications issuing an input/output request running on the host;
creating, by the offloading card, corresponding multiple namespaces for the multiple applications, according to the namespace creation request; and
allocating, by the offloading card, multiple hardware queues corresponding to the created multiple namespaces according to the namespace creation request and binding the allocated multiple hardware queues respectively to the corresponding namespaces.

In an embodiment of the present disclosure, the host has a virtual machine running thereon, and the multiple applications run in the virtual machine, the virtual machine includes a driver configured to manage the multiple hardware queues, where the sending, by the host, the namespace creation request to the offloading card, includes:
sending, by the virtual machine, the namespace creation request to the offloading card via the driver.

In an embodiment of the present disclosure, the offloading card includes a controller and a hardware accelerator, where the creating, by the offloading card, the corresponding multiple namespaces for the multiple applications, according to the namespace creation request, includes:
creating, by the controller, respective namespaces for the multiple applications according to the namespace creation request,
where the allocating, by the offloading card, the multiple hardware queues corresponding to the created multiple namespaces according to the namespace creation request and binding the allocated multiple hardware queues respectively to the corresponding namespaces, includes:
   allocating, by the controller, the multiple hardware queues corresponding to the created multiple namespaces from the hardware accelerator and binding the allocated multiple hardware queues respectively to the corresponding namespaces.

In an embodiment of the present disclosure, the host includes a central processing unit with multiple cores, the virtual machine includes a user space and a kernel space,
where the user space has the multiple applications running therein, the applications are executed by corresponding cores, and
where the kernel space includes a general block layer and the driver, the general block layer includes multiple software queues corresponding to the multiple cores and establishes a one-to-one correspondence relationship from the multiple software queues to the multiple hardware queues.

In an embodiment of the present disclosure, the driver is an NVMe driver, the controller is an NVMe controller,
where the host is connected to an NVMe device via the offloading card,
where the method further includes:
   mounting the NVMe device inside the virtual machine;
   issuing, by an application running in the user space, an input/output request to the general block layer;
   converting, by processing of the general block layer and the NVMe driver, the input/output request into an input/output request conforming with an NVMe protocol, and sending the input/output request conforming with the NVMe protocol to the NVMe controller;
   transferring, by the NVMe controller, the input/output request conforming with the NVMe protocol to the offloading card via the hardware queues corresponding to the created namespaces; and
   sending, by the offloading card, the input/output request conforming with the NVMe protocol to the NVMe device.

An implementation of the present disclosure also provides an electronic device, as shown in FIG. 7, including at least one processor 701; and a memory 702 connected in communication with at least one processor 701; where the memory 702 stores instructions that can be executed by at least one processor 701; the instructions run in a system for processing an input/output request, where the system for processing the input/output request includes a host and an offloading card, and an NVMe device connected to the host via the offloading card;
where the host has a virtual machine running thereon, the host includes a central processing unit with multiple cores, the virtual machine includes a user space and a kernel space, where the user space has multiple applications issuing an input/output request running therein, the applications are executed by corresponding cores, the kernel space includes a general block layer and an NVMe driver, the general block layer includes multiple software queues corresponding to the multiple cores, the virtual machine sends a namespace creation request to the offloading card via the NVMe driver,
where, the offloading card includes an NVMe controller and a hardware accelerator, the NVMe controller creates respective namespaces for the multiple applications according to the namespace creation request, allocates the multiple hardware queues corresponding to the created multiple namespaces from the hardware accelerator and binds the allocated multiple hardware queues respectively to the corresponding namespaces,
where, the NVMe driver is configured to manage the multiple hardware queues, the general block layer establishes a one-to-one correspondence relationship from the multiple software queues to the multiple hardware queues.
where the method further includes:
   issuing, by an application running in the user space, an input/output request to the general block layer;
   converting, by processing of the general block layer and the NVMe driver, the input/output request into an input/output request conforming with an NVMe protocol, and sending the input/output request conforming with the NVMe protocol to the NVMe controller;
   transferring, by the NVMe controller, the input/output request conforming with the NVMe protocol to the offloading card via the hardware queues corresponding to the created namespaces,
   sending, by the offloading card, the input/output request conforming with the NVMe protocol to the NVMe device.

FIG. 8 is a schematic structural diagram of a computer system suitable for implementing methods according to respective implementations of the present disclosure. As shown in FIG. 8, a computer system 800 includes a processing unit 801 which can execute various processes in the implementations shown in the above drawings according to programs stored in a read-only memory (ROM) 802 or programs loaded from a storage portion 808 into a random access memory (RAM) 803. In RAM 803, various programs and data required for the operation of the system 800 are also stored. CPU 801, ROM 802, and RAM 803 are connected to each other through a bus 804. The input/output (I/O) interface 805 is also connected to the bus 804.

Following components are connected to the I/O interface 805: an input portion 806 including keyboard, mouse, etc.; an output portion 807 including such as cathode ray tubes (CRT), liquid crystal displays (LCD), and speakers, etc.; a storage portion 808 including hard drives, etc.; and a communication portion 809 including network interface cards such as LAN cards, modems, etc. The communication portion 809 executes communication processing via a network such as the Internet. A driver 810 is also connected to the I/O interface 805 as needed. A removable medium 811, such as magnetic disk, optical disk, magneto-optical disk, semiconductor storage device, etc., are installed on the driver 810 as needed, so that computer programs read from them can be installed into the storage portion 808 as needed. The processing unit 801 can be implemented as a processing unit such as CPU, GPU, TPU, FPGA, NPU, etc.

Specifically, according to the implementations of the present disclosure, the method described above with reference to the drawings can be implemented as a computer software program. For example, an implementation of the present disclosure includes a computer program product including a computer program tangibly included in a readable medium, where the computer program includes program codes for executing the method shown in the drawings. In such an implementation, the computer program can be downloaded and installed from the network via the communication portion 809, and/or installed from the removable medium 811. For example, an implementation of the present disclosure includes a readable storage medium storing computer instructions, when the computer instructions are executed by a processor, program codes for executing the methods shown in the drawings are implemented.

The flowcharts and block diagrams in the drawings illustrate the architecture, functions, and operations that are possibly implemented by the system, method, and computer program product according to various implementations of the present disclosure. In this regard, each box in a flowchart or block diagram can represent a module, program segment, or part of codes, the module, program segment, or part of codes contains one or more executable instructions for implementing specified logical functions. It should also be noted that in some alternative implementations, the functions marked in the box may take place in a different order than those marked in the drawings. For example, two consecutive boxes can actually be executed basically in parallel, and sometimes they can also be executed in reverse order, depending on the functions involved. It should also be noted that each box in a block diagram and/or flowchart, as well as combinations of boxes in a block diagram and/or flowchart, can be implemented by using hardware based dedicated systems that perform specified functions or operations, or can be implemented by using a combination of dedicated hardware and computer instructions.

The units or modules described in the implementations of the present disclosure can be implemented through software or hardware. The described units or modules can also be set in a processor, and the names of these units or modules do not constitute a limitation on the units or modules themselves in some cases.

On the other hand, the present disclosure also provides a computer readable storage medium, where the computer readable storage medium may be a computer readable storage medium included in the node described in the above implementations; it can also be a computer readable storage medium that exists separately and is not assembled into a device. The computer readable storage medium stores one or more programs, where the program are used by one or more processors to execute the methods described in the present disclosure.

The above descriptions are only preferred embodiments of the present disclosure and an explanation of the technical principles applied. Those skilled in the arts should understand that the scope of the invention involved in the present disclosure is not limited to a technical solution formed by the specific combination of the above technical features, and should also cover other technical solutions formed by any combination of the above technical features or their equivalent features without departing from the inventive concept. For example, a technical solution formed by replacing the above features with (but not limited to) technical features with similar functions disclosed in the present disclosure.

## Claims

1. A system for managing a namespace of an offloading card, comprising a host and the offloading card connected to the host, wherein,
the host has multiple applications issuing an input/output request running thereon, and the host sends a namespace creation request to the offloading card,
the offloading card creates corresponding multiple namespaces for the multiple applications according to the namespace creation request, and
the offloading card allocates multiple hardware queues corresponding to the created multiple namespaces according to the namespace creation request and binds the allocated multiple hardware queues respectively to the corresponding namespaces.

2. The system according to claim 1, wherein the host has a virtual machine running thereon, the multiple applications run in the virtual machine, and the virtual machine comprises:
a driver, configured to manage the multiple hardware queues, wherein the virtual machine sends the namespace creation request to the offloading card via the driver.

3. The system according to claim 2, wherein the offloading card comprises a controller and a hardware accelerator, wherein,
the controller creates respective namespaces for the multiple applications according to the namespace creation request, allocates the multiple hardware queues corresponding to the created multiple namespaces from the hardware accelerator and binds the allocated multiple hardware queues respectively to the corresponding namespaces.

4. The system according to claim 3, wherein the host comprises a central processing unit with multiple cores, the virtual machine comprises a user space and a kernel space,
wherein the user space has the multiple applications running therein, the applications are executed by corresponding cores, and
wherein the kernel space comprises a general block layer and the driver, the general block layer comprises multiple software queues corresponding to the multiple cores and establishes a one-to-one corresponding relationship from the multiple software queues to the multiple hardware queues.

5. The system according to claim 4, wherein the driver is an NVMe driver, the controller is an NVMe controller,
wherein the host is connected to an NVMe device via the offloading card,
wherein the NVMe device is mounted inside the virtual machine,
wherein an application running in the user space issues an input/output request to the general block layer,
wherein the input/output request is converted into an input/output request conforming with an NVMe protocol by processing of the general block layer and the NVMe driver, and the input/output request conforming with the NVMe protocol is sent to the NVMe controller,
wherein the NVMe controller transfers the input/output request conforming with the NVMe protocol to the offloading card via the hardware queues corresponding to the created namespaces,
wherein the offloading card sends the input/output request conforming with the NVMe protocol to the NVMe device.

6. A method for managing a namespace of an offloading card, wherein the method runs in a system for managing namespace of an offloading card, and the system for managing the namespace of the offloading card comprises a host and the offloading card connected to the host, wherein the method comprises:
sending, by the host, a namespace creation request to the offloading card, based on multiple applications issuing an input/output request running on the host;
creating, by the offloading card, corresponding multiple namespaces for the multiple applications, according to the namespace creation request; and
allocating, by the offloading card, multiple hardware queues corresponding to the created multiple namespaces according to the namespace creation request and binding the allocated multiple hardware queues respectively to the corresponding namespaces.

7. The method according to claim 6, wherein the host has a virtual machine running thereon, and the multiple applications run in the virtual machine, the virtual machine comprises a driver configured to manage the multiple hardware queues, wherein the sending, by the host, the namespace creation request to the offloading card, comprises:
sending, by the virtual machine, the namespace creation request to the offloading card via the driver.

8. The method according to claim 7, wherein the offloading card comprises a controller and a hardware accelerator, wherein the creating, by the offloading card, the corresponding multiple namespaces for the multiple applications, according to the namespace creation request, comprises:
creating, by the controller, respective namespaces for the multiple applications according to the namespace creation request,
wherein the allocating, by the offloading card, the multiple hardware queues corresponding to the created multiple namespaces according to the namespace creation request and binding the allocated multiple hardware queues respectively to the corresponding namespaces, comprises:
allocating, by the controller, the multiple hardware queues corresponding to the created multiple namespaces from the hardware accelerator and binding the allocated multiple hardware queues respectively to the corresponding namespaces.

9. The method according to claim 8, wherein the host comprises a central processing unit with multiple cores, the virtual machine comprises a user space and a kernel space,
wherein the user space has the multiple applications running therein, the applications are executed by corresponding cores, and
wherein the kernel space comprises a general block layer and the driver, the general block layer comprises multiple software queues corresponding to the multiple cores and establishes a one-to-one correspondence relationship from the multiple software queues to the multiple hardware queues.

10. The method according to claim 9, wherein the driver is an NVMe driver, the controller is an NVMe controller,
wherein the host is connected to an NVMe device via the offloading card,
wherein the method further comprises:
mounting the NVMe device inside the virtual machine;
issuing, by an application running in the user space, an input/output request to the general block layer;
converting, by processing of the general block layer and the NVMe driver, the input/output request into an input/output request conforming with an NVMe protocol, and sending the input/output request conforming with the NVMe protocol to the NVMe controller;
transferring, by the NVMe controller, the input/output request conforming with the NVMe protocol to the offloading card via the hardware queues corresponding to the created namespaces; and
sending, by the offloading card, the input/output request conforming with the NVMe protocol to the NVMe device.

11. A system for processing an input/output request, comprising a host, an offloading card, and an NVMe device connected to the host via the offloading card,
wherein the host has a virtual machine running thereon, the host comprises a central processing unit with multiple cores, the virtual machine comprises a user space and a kernel space, wherein the user space has multiple applications issuing an input/output request running therein, the applications are executed by corresponding cores, the kernel space comprises a general block layer and an NVMe driver, the general block layer comprises multiple software queues corresponding to the multiple cores, the virtual machine sends a namespace creation request to the offloading card via the NVMe driver,
wherein the offloading card comprises an NVMe controller and a hardware accelerator, the NVMe controller creates respective namespaces for the multiple applications according to the namespace creation request, allocates multiple hardware queues corresponding to the created multiple namespaces from the hardware accelerator and binds the allocated multiple hardware queues respectively to the corresponding namespaces,
wherein the NVMe driver is configured to manage the multiple hardware queues, the general block layer establishes a one-to-one correspondence relationship from the multiple software queues to the multiple hardware queues,
wherein an application running in the user space issues an input/output request to the general block layer,
wherein the input/output request is converted into an input/output request conforming with an NVMe protocol by processing of the general block layer and the NVMe driver, and the input/output request conforming with the NVMe protocol is sent to the NVMe controller,
wherein the NVMe controller transfers the input/output request conforming with the NVMe protocol to the offloading card via the hardware queues corresponding to the created namespaces, and
wherein the offloading card sends the input/output request conforming with the NVMe protocol to the NVMe device.

12. A method for processing an input/output request, wherein the method runs in a system for processing an input/output request, the system for processing the input/output request comprises a host, an offloading card, and an NVMe device connected to the host via the offloading card,
wherein the host has a virtual machine running thereon, the host comprises a central processing unit with multiple cores, the virtual machine comprises a user space and a kernel space, wherein the user space has multiple applications issuing an input/output request running therein, the applications are executed by corresponding cores, the kernel space comprises a general block layer and an NVMe driver, the general block layer comprises multiple software queues corresponding to the multiple cores, the virtual machine sends a namespace creation request to the offloading card via the NVMe driver,
wherein the offloading card comprises an NVMe controller and a hardware accelerator, the NVMe controller creates respective namespaces for the multiple applications according to the namespace creation request, allocates multiple hardware queues corresponding to the created multiple namespaces from the hardware accelerator and binds the allocated multiple hardware queues respectively to the corresponding namespaces,
wherein the NVMe driver is configured to manage the multiple hardware queues, the general block layer establishes a one-to-one correspondence relationship from the multiple software queues to the multiple hardware queues,
wherein the method further comprises:
issuing, by an application running in the user space, an input/output request to the general block layer;
converting, by processing of the general block layer and the NVMe driver, the input/output request into an input/output request conforming with NVMe protocol, and sending the input/output request conforming with the NVMe protocol to the NVMe controller;
transferring, by the NVMe controller, the input/output request conforming with the NVMe protocol to the offloading card via the hardware queues corresponding to the created namespaces; and
sending, by the offloading card, the input/output request conforming with the NVMe protocol to the NVMe device.

13. An electronic device, comprising a memory and a processor; wherein the memory is configured to store one or more pieces of computer instructions, the one or more pieces of computer instructions are executed by the processor to implement steps of the method according to any one of claims 6-10 and 12.

14. A readable storage medium, storing computer instructions, wherein when the computer instructions are executed by a processor, steps of the method according to any one of claims 6-10 and 12 are implemented.
